# EUROPEAN PATENT SPECIFICATION

(11) **EP 2 162 665 B1**
(45) Date of publication and mention of the grant of the patent: **11.11.2015**
(21) Application number: 08756191.6
(22) Date of filing: 23.05.2008
(51) Int. Cl.: F16L 35/00, F16L 41/08, F16L 23/16

(54) **METHOD AND APPARATUS FOR MAKING A FLUID CONNECTION TO A CONTAINER**
VERFAHREN UND VORRICHTUNG ZUR HERSTELLUNG EINER STRÖMUNGSVERBINDUNG MIT EINEM BEHÄLTER
PROCÉDÉ ET APPAREIL DE FABRICATION D'UN RACCORDEMENT FLUIDIQUE À UN CONTENEUR

(30) Priority: 23.05.2007 US 939691 P
(43) Date of publication of application: 17.03.2010
(73) Proprietor: Eppendorf, Inc., Edison NJ 08818 (US)
(72) Inventor: O'CONNOR, Thomas, Nelson, Jackson, NJ 08527 (US)
(74) Representative: Dummett Copp LLP
(86) International application number: PCT/US2008/064698
(87) International publication number: WO 2008/147990

(56) References cited:
- EP-A1- 1 912 012
- WO-A1-2007/015434
- DE-A1-102005 020 259
- US-A- 3 606 399
- US-A- 4 930 816
- US-A- 5 593 279
- US-A- 5 944 363
- US-A1- 2002 163 194

## Description

### FIELD OF THE INVENTION

This invention relates to a method for connecting a container and a fluid conduit.

### BACKGROUND OF THE INVENTION

When dealing with a container, a method is needed for joining the piping, tubing or instrumentation to the container. The seal between the container and conduit are crucial, particularly in a sanitary application. This is typically accomplished by welding a fitting into the container, which can be quite costly particularly in a sanitary container which requires a great deal of polishing and a smooth finish.

A number of documents disclose connections between containers and conduits. In particular, WO 2007/015434 and EP 1912012 disclose a pipe fitting including a metal seal for preventing leakage of high pressure gases. A number of other documents disclose connectors for specific applications, for example, US 3606399 discloses an O-seal fitting for connecting pipes to threaded ports, US 5593279 discloses a suction connector for a pump and DE 102005020259 discloses a connection arrangement for refrigerant lines.

### SUMMARY OF THE INVENTION

An aspect of the present invention provides a container/fluid conduit connector assembly including a container having an interior and an exterior and a receptacle. The receptacle includes an opening and an exterior sealing surface adjoining and surrounding the opening. The assembly also includes a fluid conduit having at one end a collar, the collar being affixed to the receptacle with a seal placed between the receptacle and the fluid conduit. The seal may be a gasket.

In various aspects of the present invention, the container and fluid conduit may be made of metal, plastic, glass, ceramic, rubber or a composite material. Also in various aspects of the invention the collar may be affixed to the receptacle by threading, fasteners or clamps.

Another aspect of the invention provides a container having an interior and an exterior and a receptacle, the receptacle including an opening, and an exterior sealing surface adjoining and surrounding the opening. Also included are a fluid conduit having at a lip at least one end, a collar sized and fitted over the fluid conduit and placed adjacent to the lip, the collar further affixed to the receptacle by one or more fastener, and a seal placed between the receptacle and the fluid conduit.

A further aspect of the invention provides a method of connecting a fluid conduit to a container. The method includes providing a container having an interior, an exterior and a receptacle. The receptacle includes an opening and an exterior sealing surface adjoining and surrounding the opening. The method further includes providing a fluid conduit having a collar at at least one end, placing a seal on the exterior sealing surface of the receptacle, placing the collar against the seal, and affixing the collar to the receptacle by one or more fastener.

Another aspect of the invention provides for the fluid conduit being separate from the collar, with the conduit having a lip or flange at one end and the collar fitting over the conduit and against the lip or flange, then the collar being fastened to the receptacle with a seal between the lip or flange and the receptacle.

### BRIEF DESCRIPTION OF THE DRAWINGS

Figure 1 is an exploded 3-dimensional view of a fluid connection with the collar integral to the fluid conduit, in accordance with an embodiment of the present invention;
Figure 2 is a cross-section of a fluid connection with a collar integral to the fluid conduit, in accordance with an embodiment of the present invention; and
Figure 3 is a cross-section of a fluid connection with the collar separate from the fluid conduit, in accordance with an embodiment of the present invention.

### DETAILED DESCRIPTION OF THE PREFERRED EMBODIMENTS

In the following description, for purposes of explanation, specific numbers, materials and configurations are set forth in order to provide a thorough understanding of the invention. It will be apparent, however, to one having ordinary skill in the art, that the invention may be practiced without these specific details. In some instances, well-known features may be omitted or simplified so as not to obscure the present invention. Furthermore, reference in the specification to one embodiment or an embodiment means that a particular feature, structure or characteristic described in connection with the embodiment is included in at least one embodiment of the invention. The appearances of the phrase in an embodiment in various places in the specification are not necessarily all referring to the same embodiment.

The present invention advantageously provides for establishment of a connection between the container and a fluid conduit which is sanitary in design, due to the proximity of the seal to the inner surface of the container.

In various embodiments, the present invention also advantageously reduces the possibility of a leak or failure by eliminating the need of welding, polishing or grinding a fitting into or onto the container wall. By eliminating the need for such welding, polishing or grinding, the present invention also allows container fabrication at greatly reduced costs.

The present invention also allows the creation of a modular container having no set predetermined fittings. Several collar arrangements may be made to adapt multiple fluid conduits to the container. These collared arrangements would be interchangeable, creating a container that is truly modular.

A preferred embodiment of the invention features a container wall in which an integral receptacle is placed. The receptacle consists of an opening, a sealing surface and a method of joining a collar to capture the fluid conduit or adapt to the fluid conduit.

The opening of the receptacle provides a means of fluid exchange between the conduit and the container. The sealing surface is mounted at the base of the receptacle. This is the point at which the fluid conduit is joined to the container. In an embodiment of the invention, a gasket or seal of some type is placed on the sealing surface and the fluid conduit is then pressed up against the gasket. A collar may be used to secure the conduit in place and generate sufficient force to seal the connection between the conduit and the container. The collar may be one piece or multiple pieces. The collar may be threaded into the receptacle, held in place by a fastener or held in place by a clamp. The collar may also be joined or integral to the fluid connector to act as an adapter between the conduit and container.

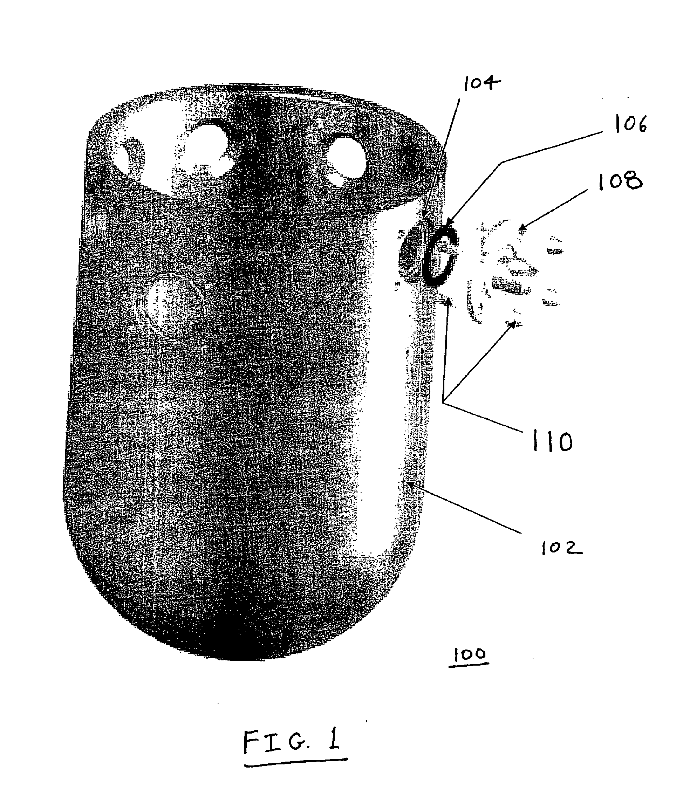

Figure 1 is a an exploded 3-dimensional view 100 of a fluid connection with the collar integral to the fluid conduit 108.

In an embodiment of the invention as depicted in Figure 1, a container 102 having one or more receptacle 104 is provided. A seal 106 is placed within the receptacle between the receptacle 104 and a collar 108 having a fluid conduit. The seal 106 preferably resides within the receptacle 104 and prevents fluid leakage from the gap between the collar 108 and receptacle 104. Such a leakage prevention may be provided by using fasteners 110 to affix the collar 108 firmly against the seal 106.

The container 102 and collar 108 may be metallic, plastic, glass, ceramic or any other material or combination of materials. The receptacle 104 is preferably formed during the container fabrication process, or may be added later.

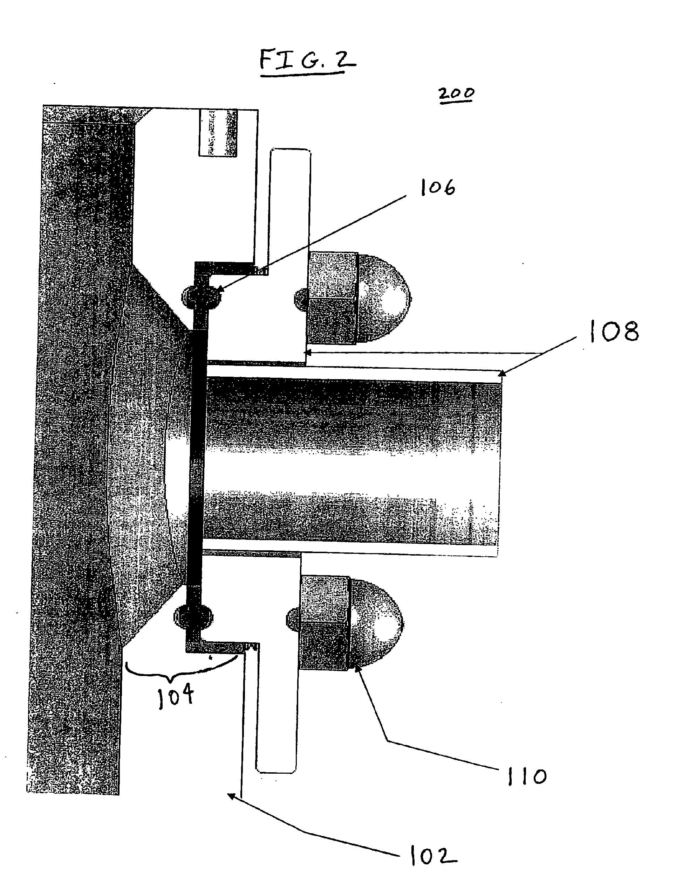

Referring now to Figure 2, a cross-sectional view 200 of a fluid connection with a collar 108 integral to the fluid conduit 108, a more detailed view of an embodiment of the invention is provided. A container 102 having a receptacle 104 as described above is depicted with the seal 106 or gasket between the collar 108 having a fluid conduit and the receptacle 104. Fasteners 110 are used to firmly attach the collar 108 to the receptacle, applying pressure to the seal 106.

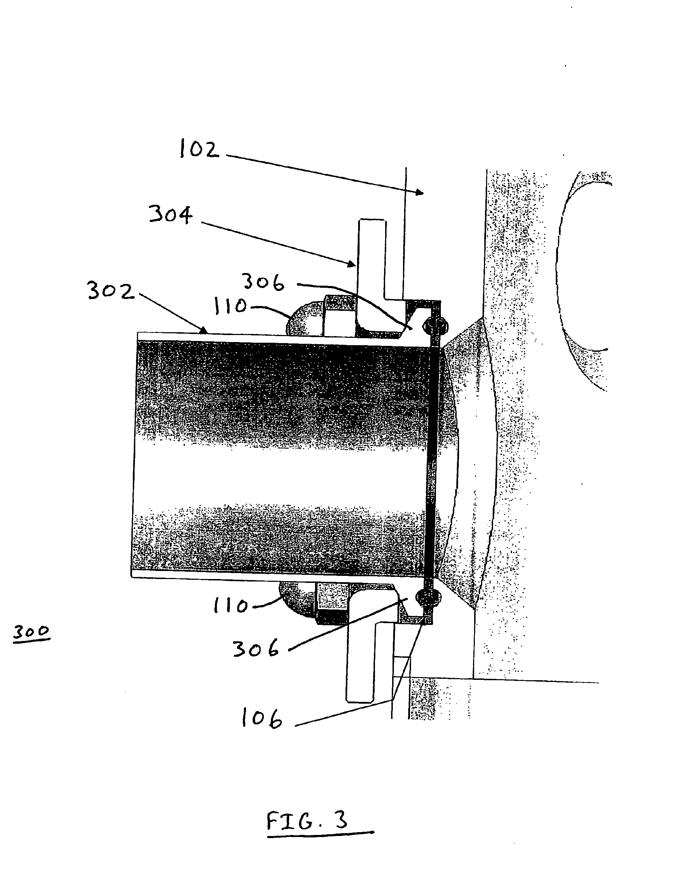

Another embodiment of the present invention is provided in Figure 3, a cross-sectional view 300 of a fluid connection with the collar 304 separate from the fluid conduit 302. A container 102 having a receptacle 104 is depicted with the seal 106 or gasket between the collar 304 and the receptacle 104. The collar 304 fits over a lip or flange 306 on the separate fluid conduit 302. Fasteners 110 are used to firmly attach the collar 108 to the receptacle, applying pressure to the seal 106.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

### Industrial Applicability

In numerous fields, including the sanitation, industrial chemistry and pharmaceutical industries, there is significant interest in connecting containers with fluid conduits in such a manner that leakage is prevented yet cost of the container is minimal.

## Claims

1. A container/fluid conduit connector assembly comprising:
a container (102) including a container wall having an interior surface and an exterior surface, the container comprising an integral receptacle (104) in said wall, the receptacle (104) comprising a recess having a base and a side wall, an opening provided in said base and an exterior sealing surface adjoining and surrounding the opening;
a fluid conduit (108), an end of the fluid conduit being received in said recess for establishing a fluid connection between the container and said conduit;
a collar located around said fluid conduit, a part of the collar extending over a part of the exterior surface surrounding said recess;
a first groove formed in a surface of the conduit or the collar;
a seal (106); and
means for fastening the collar to the receptacle so as to apply a force to the seal to form a fluid tight seal between said conduit and the container,
**characterized in that** the assembly comprises a second groove formed in said exterior sealing surface and a part of the seal is received within each of the first and second grooves.

2. The container/fluid conduit connector assembly according to claim 1, wherein the container (102) is comprised of one of: metal, plastic, ceramic, glass, rubber or composite material.

3. The container/fluid conduit connector assembly according to claim 1 or claim 2, wherein the fluid conduit (108) is comprised of one of: metal, plastic, ceramic, glass, rubber, or composite material.

4. The container/fluid conduit connector assembly according to any preceding claim, wherein the collar and receptacle (104) are threaded and the collar is affixed to the receptacle by threading.

5. The container/fluid conduit connector assembly according to any one of claims 1 to 3, wherein the collar is affixed to the receptacle by one or more fasteners (110).

6. The container/fluid conduit connector assembly according to any one of claims 1 to 3, wherein the collar is affixed to the receptacle by one or more clamps.

7. The container/fluid conduit connector assembly according to any preceding claim, wherein the seal (106) is a gasket.

8. The container/fluid conduit connector assembly according to any preceding claim, wherein the seal comprises a first face and an opposing second face and a first ridge is provided on the first face and a second ridge is provided on the second face, and wherein the first face contacts said surface of the conduit or the collar such that the first ridge is received in the first groove and the second face contacts the exterior sealing surface and the second ridge is received in the second groove.

9. A container/fluid conduit connector assembly according to any preceding claim, wherein the collar is integral with the fluid conduit.

10. A container/fluid conduit connector assembly according to any one of claims 1 to 8, wherein said end of the fluid conduit comprises a lip and the first groove is formed in a surface of the lip, and wherein the collar is fitted over the fluid conduit adjacent to the lip so as to apply a force to said lip when the collar is fastened to the receptacle.

11. A method of connecting a fluid conduit (108) to a container (102), the method comprising:
providing a container (102) including a container wall having an interior surface and an exterior surface, the container comprising an integral receptacle (104) in said wall, the receptacle (104) comprising a recess having a base and a side wall, an opening provided in said base and an exterior sealing surface adjoining and surrounding the opening, a second groove being formed in said exterior sealing surface;
providing a fluid conduit (108) and a collar located around said fluid conduit, a first groove being formed in a surface of the conduit or the collar;
placing a seal (106) on the exterior sealing surface of the receptacle (104) such that a part of the seal is received within the second groove;
placing an end of the fluid conduit in said recess so as to establish a fluid connection between the container and said conduit and locating the collar such that a part of the collar extends over a part of the exterior surface surrounding said recess, the fluid conduit and/or collar being located such that a part of the seal is received within the first groove; and
affixing the collar to the receptacle (104) so as to apply a force to the seal to form a fluid tight seal between said conduit and the container.

12. A method as claimed in claim 11 in which the collar is separate from the fluid conduit and the fluid conduit comprises a lip, the first groove being formed in a surface of the lip, and wherein the method further comprises placing the collar (304) around the fluid conduit (302), against the lip (306).

## Patentansprüche

1. Behälter-/Fluidleitungs-Verbindungsanordnung mit:
einem Behälter (102), der eine Behälterwand mit einer Innenfläche und einer Außenfläche umfasst, wobei der Behälter ein integrales Anschlusselement (104) in der Wand aufweist, wobei das Anschlusselement (104) eine Ausnehmung mit einer Grundplatte und einer Seitenwand aufweist, eine Öffnung in der Grundplatte vorgesehen ist und eine äußere Dichtfläche an die Öffnung angrenzt und sie umgibt;
einer Fluidleitung (108), deren eines Ende in der Ausnehmung aufgenommen ist, um eine Fluidverbindung zwischen dem Behälter und der Leitung aufzubauen;
einer Manschette, die um die Leitung herum angeordnet ist, wobei ein Teil der Manschette sich über einen Teil der äußeren Fläche erstreckt, die die Ausnehmung umgibt;
einer ersten Rille, die in einer Oberfläche der Leitung oder der Manschette ausgebildet ist;
einer Dichtung (106); und
Mitteln zur Befestigung der Manschette an dem Anschlusselement, um eine Kraft auf die Dichtung auszuüben, um eine fluiddichte Dichtung zwischen der Leitung und dem Behälter zu formen,
**dadurch gekennzeichnet, dass** die Anordnung eine zweite Rille aufweist, die in der äußeren Dichtfläche ausgebildet ist, und dass ein Teil der Dichtung innerhalb jeder der ersten und zweiten Rillen aufgenommen ist.

2. Behälter-/Fluidleitungs-Verbindungsanordnung nach Anspruch 1, wobei der Behälter (102) aus einem der folgenden Materialien besteht: Metall, Kunststoff, Keramik, Glas, Gummi oder Verbundwerkstoff.

3. Behälter-/Fluidleitungs-Verbindungsanordnung nach Anspruch 1 oder Anspruch 2, wobei die Fluidleitung (108) aus einem der folgenden Materialien besteht: Metall, Kunststoff, Keramik, Glas, Gummi oder Verbundwerkstoff.

4. Behälter-/Fluidleitungs-Verbindungsanordnung nach einem vorhergehenden Anspruch, wobei die Manschette und das Anschlusselement (104) mit Gewinde versehen sind und die Manschette auf das Anschlusselement mittels Aufschrauben befestigt ist.

5. Behälter-/Fluidleitungs-Verbindungsanordnung nach einem der Ansprüche 1 bis 3, wobei die Manschette an dem Anschlussstück durch ein oder mehrere Verbindungselemente (110) befestigt ist.

6. Behälter-/Fluidleitungs-Verbindungsanordnung nach einem der Ansprüche 1 bis 3, wobei die Manschette an dem Anschlussstück durch eine oder mehrere Klemmen befestigt ist.

7. Behälter-/Fluidleitungs-Verbindungsanordnung nach einem vorhergehenden Anspruch, wobei die Dichtung (106) ein Dichtring ist.

8. Behälter-/Fluidleitungs-Verbindungsanordnung nach einem vorhergehenden Anspruch, wobei die Dichtung eine erste Oberfläche und eine gegenüber liegende zweite Oberfläche aufweist, und eine erste Rippe auf der ersten Oberfläche vorgesehen ist und eine zweite Rippe auf der zweiten Oberfläche vorgesehen ist, und wobei die erste Oberfläche die Oberfläche der Leitung oder der Manschette derart kontaktiert, dass die erste Rippe in der ersten Rille aufgenommen ist, und die zweite Oberfläche die äußere Dichtfläche kontaktiert und die zweite Rippe in der zweiten Rille aufgenommen ist.

9. Behälter-/Fluidleitungs-Verbindungsanordnung nach einem vorhergehenden Anspruch, wobei die Manschette integral mit der Fluidleitung ausgebildet ist.

10. Behälter-/Fluidleitungs-Verbindungsanordnung nach einem der Ansprüche 1 bis 8, wobei das Ende der Fluidleitung eine Lippe aufweist und die erste Rille in einer Oberfläche der Lippe ausgebildet ist, und wobei die Manschette über die Fluidleitung angrenzend an die Lippe eingepasst aufgesetzt ist, so dass eine Kraft auf die Lippe ausgeübt wird, wenn die Manschette an dem Anschlussstück befestigt ist.

11. Verfahren zum Verbinden einer Fluidleitung (108) mit einem Behälter (102), das folgende Schritte aufweist:
Bereitstellen eines Behälters (102), der eine Behälterwand aufweist mit einer Innenfläche und einer Außenfläche, wobei der Behälter ein integrales Anschlusselement (104) in der Wand umfasst, wobei das Anschlusselement (104) eine Ausnehmung mit einer Grundplatte und einer Seitenwand aufweist, eine Öffnung in der Grundplatte vorgesehen ist und eine äußere Dichtfläche an die Öffnung angrenzt und sie umgibt, wobei eine zweite Rille in der äußeren Dichtfläche ausgebildet ist;
Bereitstellen einer Fluidleitung (108) und einer Manschette, die um die Fluidleitung herum angeordnet ist, wobei eine erste Rille in einer Oberfläche der Leitung oder der Manschette ausgebildet ist;
Anordnen einer Dichtung (106) auf der äußeren Dichtfläche des Anschlusselements (104), so dass ein Teil der Dichtung innerhalb der zweiten Rille aufgenommen ist;
Anordnen eines Endes der Fluidleitung in der Ausnehmung, um eine Fluidverbindung zwischen dem Behälter und der Leitung herzustellen und Anordnen der Manschette, so dass ein Teil der Manschette sich über einen Teil der äußeren Oberfläche erstreckt, die die Ausnehmung umgibt, wobei die Fluidleitung und / oder die Manschette derart angeordnet ist, dass ein Teil der Dichtung innerhalb der ersten Rille aufgenommen ist; und
Befestigen der Manschette an dem Anschlusselement (104), um eine Kraft auf die Dichtung auszuüben, um eine fluiddichte Dichtung zwischen der Leitung und dem Behälter auszubilden.

12. Verfahren nach Anspruch 11, wobei die Manschette von der Fluidleitung getrennt ist und die Fluidleitung eine Lippe aufweist, wobei die erste Rille in einer Oberfläche der Lippe ausgebildet ist, und wobei das Verfahren des Weiteren das Anordnen der Manschette (304) um die Fluidleitung (302) gegen die Lippe (306) umfasst.

## Revendications

1. Ensemble raccord de contenant/conduit de fluide comprenant :
un contenant (102) comportant une paroi de contenant ayant une surface intérieure et une surface extérieure, le contenant comprenant un réceptacle intégré (104) dans ladite paroi, le réceptacle (104) comprenant un évidement ayant une base et une paroi latérale, une ouverture ménagée dans ladite base et une surface d'étanchéité extérieure jouxtant et entourant l'ouverture ;
un conduit de fluide (108), une extrémité du conduit de fluide étant reçue dans ledit évidement pour établir un raccordement de fluide entre le contenant et ledit conduit ;
un collier localisé autour dudit conduit de fluide, une partie du collier s'étendant sur une partie de la surface extérieure entourant ledit évidement ;
une première gorge formée dans une surface du conduit ou du collier ;
un joint (106) ; et
un moyen d'arrimage du collier au réceptacle de façon à appliquer une force au joint pour former un joint étanche aux fluides entre ledit conduit et le contenant,
**caractérisé en ce que** l'ensemble comprend une seconde gorge formée dans ladite surface d'étanchéité extérieure et une partie de joint est reçue au sein de chacune des première et seconde gorges.

2. Ensemble raccord de contenant/conduit selon la revendication 1, dans lequel le contenant (102) est composé d'un élément parmi : un métal, un plastique, une céramique, du verre, du caoutchouc ou un matériau composite.

3. Ensemble raccord de contenant/conduit selon la revendication 1 ou la revendication 2, dans lequel le conduit de fluide (108) est composé d'un élément parmi : un métal, un plastique, une céramique, du verre, du caoutchouc ou un matériau composite.

4. Ensemble raccord de contenant/conduit selon l'une quelconque des revendications précédentes, dans lequel le collier et le réceptacle (104) sont filetés et le collier est apposé au réceptacle par filetage.

5. Ensemble raccord de contenant/conduit selon l'une quelconque des revendications 1 à 3, dans lequel le collier est apposé au réceptacle par une ou plusieurs attaches (110).

6. Ensemble raccord de contenant/conduit selon l'une quelconque des revendications 1 à 3, dans lequel le collier est apposé au réceptacle par une ou plusieurs brides.

7. Ensemble raccord de contenant/conduit selon l'une quelconque des revendications précédentes, dans lequel le joint (106) est une garniture d'étanchéité.

8. Ensemble raccord de contenant/conduit selon l'une quelconque des revendications précédentes, dans lequel le joint comprend une première face et une seconde face opposée et une première crête est ménagée sur la première face et une seconde crête est ménagée sur la seconde face, et dans lequel la première face entre en contact avec ladite surface du conduit ou du collier de sorte que la première crête soit reçue dans la première gorge et la seconde face entre en contact avec la surface d'étanchéité extérieure et la seconde crête est reçue dans la seconde gorge.

9. Ensemble raccord de contenant/conduit selon l'une quelconque des revendications précédentes, dans lequel le collier est solidaire du conduit de fluide.

10. Ensemble raccord de contenant/conduit selon l'une quelconque des revendications 1 à 8, dans lequel ladite extrémité du conduit de fluide comprend une lèvre et la première gorge est formée dans une surface de la lèvre, et dans lequel le collier est ajusté sur le conduit de fluide adjacent à la lèvre de façon à appliquer une force à ladite lèvre lorsque le collier est arrimé au réceptacle.

11. Procédé de raccordement d'un conduit de fluide (108) à un contenant (102), le procédé comprenant :
la fourniture d'un contenant (102) comportant une paroi de contenant ayant une surface intérieure et une surface extérieure, le contenant comprenant un réceptacle solidaire (104) dans ladite paroi, le réceptacle (104) comprenant un évidement ayant une base et une paroi latérale, une ouverture ménagée dans ladite base et une surface d'étanchéité extérieure jouxtant et entourant l'ouverture, une seconde gorge étant formée dans ladite surface d'étanchéité extérieure ;
la fourniture d'un conduit de fluide (108) et d'un collier localisé autour dudit conduit de fluide, une première gorge étant formée dans une surface du conduit ou du collier ;
la mise en place d'un joint (106) sur la surface d'étanchéité extérieure du réceptacle (104) de sorte qu'une partie du joint soit reçue au sein de la seconde gorge ;
la mise en place d'une extrémité du conduit de fluide dans ledit évidement de façon à établir un raccordement de fluide entre le contenant et ledit conduit et la localisation du collier de sorte qu'une partie du collier s'étende sur une partie de la surface extérieure entourant ledit évidement, le conduit de fluide et/ou le collier étant localisés de sorte qu'une partie de joint soit reçue au sein de la première gorge ; et
l'apposition du collier au réceptacle (104) de façon à appliquer une force au joint pour former un joint étanche aux fluides entre ledit conduit et le contenant.

12. Procédé selon la revendication 11, dans lequel le collier est séparé du conduit de fluide et le conduit de fluide comprend une lèvre, la première gorge étant formée dans une surface de la lèvre, et dans lequel le procédé comprend en outre la mise en place du collier (304) autour du conduit de fluide (302), contre la lèvre (306).
